# EUROPÄISCHE PATENTSCHRIFT

(11) **EP 3 057 833 B1**
(45) Veröffentlichungstag und Bekanntmachung des Hinweises auf die Patenterteilung: **17.06.2020**
(21) Anmeldenummer: 14783997.1
(22) Anmeldetag: 20.09.2014
(51) Int. Cl.: B60T 8/17, B60Q 1/56, B60T 17/22, B60Q 1/22, B60Q 1/44, B60W 30/18

(54) **FAHRZEUG UND VERFAHREN ZUM AUSLEUCHTEN EINES BEREICHS HINTER EINEM FAHRZEUG**
VEHICLE AND METHOD FOR ILLUMINATING A REGION REARWARD OF A VEHICLE
VÉHICULE ET PROCÉDÉ POUR ÉCLAIRER UNE ZONE À L'ARRIÈRE D'UN VÉHICULE

(30) Priorität: 16.10.2013 DE 102013017213
(43) Veröffentlichungstag der Anmeldung: 24.08.2016
(73) Patentinhaber: Audi AG, 85045 Ingolstadt (DE)
(72) Erfinder: BAUCH, Stefan, 85055 Etting (DE); SINGER, Carsten, 85088 Vohburg (DE)
(74) Vertreter: Thielmann, Frank
(86) Internationale Anmeldenummer: PCT/EP2014/002555
(87) Internationale Veröffentlichungsnummer: WO 2015/055273

(56) Entgegenhaltungen:
- EP-A2- 1 327 553
- WO-A1-90/12711
- WO-A2-2012/095715
- WO-A2-2012/095715
- DE-A1-102011 000 358
- GB-A- 2 483 719
- GB-A- 2 483 719
- US-A1- 2003 090 569
- US-A1- 2004 032 324
- US-A1- 2004 032 324
- US-A1- 2004 130 902
- US-A1- 2004 130 902

## Beschreibung

Die Erfindung betrifft ein Fahrzeug und ein Verfahren zum Ausleuchten eines Bereichs hinter einem Fahrzeug.

Fahrzeuge werden heutzutage vermehrt mit einer Einrichtung zur Umfelderfassung ausgestattet. Hierbei wird die Umgebung des Fahrzeugs mit optischen Mitteln erfasst, um beispielsweise fest installierte Objekte oder sich bewegende Objekte als Hindernisse beim Fahren oder Einparken zu erkennen. Ferner kann auch eine Totwinkelüberwachung eine Anwendung einer Umfelderfassung sein.

GB 2 483 719 A beschreibt ein Bremssteuersystem in einem Fahrzeug mit einem Bremsbetätigungsmittel zum Betätigen der Bremsen, um eine Bremskraft bereitzustellen. Ferner weist das Bremssteuersystem ein Bremssteuermittel auf, um das Bremsbetätigungsmittel zu steuern, wobei das Bremssteuermittel ausgebildet ist, einen gewählten Gang zu detektieren. Hierbei kann das Bremssteuersystem die Bewegung des Fahrzeugs in einer Richtung begrenzen, die entgegengesetzt zur gewählten Fahrtrichtung ist, wobei die gewählte Fahrtrichtung durch das Einlegen des Ganges gewählt wird.

WO 2012/095715 A2 beschreibt ein Fahrzeug mit einem rückwärtigen Sensor, der Hindernisse hinter dem Fahrzeug erkennt. Ferner weist das Fahrzeug eine rückwärtige Kontaktvermeidungseinrichtung auf, die eine Bewegung des Fahrzeugs steuert, um einen Kontakt zwischen dem Fahrzeug und dem durch den rückwärtigen Sensor erkannten Hindernis zu vermeiden.

EP 1 327 553 A2 beschreibt ein Parkassistenzsystem für ein Fahrzeug mit einem automatischen Lenksystem und einem Steuersystem. Hierbei wird ein elektronisch gesteuertes Bremssystem eingesetzt, wobei die Bremskraft durch Einstellen eines hydraulischen Bremsdruckes gesteuert wird.

WO 90/12711 A1 beschreibt ein Fahrzeug, das mit einem rückwärtigen Sensor ausgestattet ist, der bei Kontakt mit einem Objekt deformierbar ist. Ferner weist das Fahrzeug ein hydraulisches Bremssystem auf, wobei über einen pneumatischen Zylinder ein Bremspedal betätigbar ist, sobald ein Objekt hinter dem Fahrzeug mit dem rückwärtigen Sensor erkannt wird.

Die Offenlegungsschrift DE 10 2011 000 358 A1 beschreibt ein Fahrzeug mit mindestens einer Kamera und mindestens einer Leuchte. Die Kamera ist zum Aufnehmen zumindest eines Teils einer Umgebung des Kraftfahrzeugs vorgesehen. Mithilfe der Leuchte kann zumindest ein Ausschnitt dieses Teils der Umgebung des Kraftfahrzeugs beleuchtet werden. Die Leuchte wird von einem Stromversorgungsmittel zur Lichterzeugung mit einem Strom versorgt, wobei dieser Strom eine erste Frequenz von 300 Hz hat.

Die Druckschrift US 2003/0090569 A1 beschreibt eine Kameraeinheit, welche in einem dritten Bremslicht eines Kraftfahrzeugs angebracht ist. Es soll ein rückwärtiger Bereich des Fahrzeugs überwacht werden.

In der Druckschrift DE 10 2005 003 191 A1 wird eine Vorrichtung zur Umfelderfassung näher beschrieben. Die Vorrichtung weist eine Lichtquelle, eine Kamera und eine Auswerteinheit auf und ermöglicht sowohl eine Hindernisdetektion wie auch eine Erfassung eines Abstandes zu dem Hindernis. Die Vorrichtung kann unter anderem dazu verwendet werden, um einen rückwärtigen Bereich des Kraftfahrzeugs auszuleuchten und um anschließend eine Erfassung eines Bildes im rückwärtigen Bereich des Kraftfahrzeugs zu ermöglichen.

Eine Anwendung der Umfelderfassung basiert auf der Notwendigkeit beim Rückwärtsfahren des Fahrzeugs ein Hindernis erkennen zu können. Der Bereich hinter dem Fahrzeug wird bekannterweise bei Betätigung eines Rückwärtsganges durch Rückfahrleuchten der Heckleuchten und eventuell durch Streulicht der Kennzeichenleuchten beleuchtet. Allerdings werden aufgrund heutiger Ausgestaltungen, insbesondere durch das verwendete Design, die Rückfahrleuchten von der Tendenz her kleiner und stellen daher nur wenig Licht hinter dem Fahrzeug bereit. Bei mit Kamerasystemen ausgestatteten Fahrzeugen stellt sich ein Problem einer ausreichenden Ausleuchtung. Bei den meisten Fahrzeugen mit einer installierten Rückfahrkamera reicht das bereitgestellte Licht häufig nicht mehr aus, um Bilder mit ausreichender Qualität aufzunehmen. Als Folge hieraus können Personen und/oder Objekte hinter dem Fahrzeug nicht oder nicht rechtzeitig erkannt werden, insbesondere wenn eine Kamera verwendet wird.

Der Erfindung liegt daher die Aufgabe zugrunde eine Lösung bereitzustellen, mit der ein Ausleuchten des Bereichs hinter einem Fahrzeug auf einfache Weise verbessert werden kann.

Diese Aufgabe wird mit einem Fahrzeug gemäß dem Gegenstand des Patentanspruchs 1 gelöst.

Ferner wird die Aufgabe der Erfindung mit einem Verfahren zum Ausleuchten eines Bereichs hinter einem Fahrzeug gemäß dem Gegenstand des Patentanspruchs 7 gelöst.

Auf diese Weise ist vorgesehen, dass durch das Einlegen eines Rückwärtsgangs eine Aktivierung oder ein Einschalten mindestens einer Bremsleuchte, bevorzugterweise aller installierten Bremsleuchten, am Fahrzeug erfolgt.

Hierbei bedeutet selbsttätig, dass der Fahrer keine Bremse betätigt, sondern ein automatisches Bremsen durch die Brems-Einschaltvorrichtung, die beispielsweise ein Bremssteuergerät ist, eingeleitet wird. Zum Erkennen eines eingelegten Rückwärtsganges ist ein Sensor im Fahrzeug installiert, der beispielsweise elektronisch arbeitet und beispielsweise das Getriebe des Fahrzeugs überwacht. Insgesamt wird lediglich durch das Einlegen eines Rückwärtsgang eine Vielzahl von Bremsleuchten des Fahrzeugs eingeschaltet, um einen Bereich hinter einem Fahrzeug, d.h. einen Außenbereich, auf einfache Weise verbessert ausleuchten zu können.

Ferner ist hierbei vorgesehen, dass mit einer eingeschalteten Bremsleuchte ein Bereich hinter dem Fahrzeug zusätzlich zu einer eingeschalteten Rückfahrleuchte ausleuchtbar ist. Auf diese Weise werden mehrere Leuchten gleichzeitig aktiviert, um die Ausleuchtung im Heckbereich des Fahrzeugs zu erhöhen.

Die Bremsleuchten im Heckbereich am Fahrzeug können hierbei so ausgerichtet sein, dass sie einen Außenbereich des Fahrzeugs, insbesondere den Bereich hinter dem Fahrzeug, ausleuchten können. Daher eignen sich die Bremsleuchten zusätzlich zu der oder den installierten Rückfahrleuchten, um den Bereich hinter dem Fahrzeug besser ausleuchten zu können. Bei dieser Vorgehensweise sind keine weiteren Installationen notwendig, da die Bremsleuchten am Fahrzeug für das Signalisieren einer Bremsung vorhanden sind. Das zusätzliche Einschalten eines oder mehrerer Bremsleuchten beim Einlegen des Rückwärtsgangs stellt zusätzlich eine weitere Sicherheit am Fahrzeug dar, da hierdurch signalisiert wird, dass sich das Fahrzeug kurz vor einem Rückwärtsfahren befindet bzw. möglicherweise ein Rückwärtsfahren bevorsteht. Hierbei muss der Fahrer keine weiteren Signalisierungen einleiten, da durch das Einlegen des Rückwärtsganges automatisch oder selbsttätig ein Aktivieren der Bremsanlage durch eine Brems-Einschaltvorrichtung erfolgt und die Betätigung der Bremsanlage wiederum ein Einschalten eines oder mehrerer Bremslichter bewirkt, indem eine Leuchten-Einschaltvorrichtung auf mindestens ein Bremslicht wirkt. Für das Aktivieren der Bremsanlage wird ein Sensor verwendet, der das Einlegen des Rückwärtsganges erkennt und der Brems-Einschaltvorrichtung signalisiert, dass die Bremsanlage zu aktivieren ist. Bei dieser Vorgehensweise sind keine weiteren Installationen in Hinblick auf Beleuchtungseinrichtungen notwendig, da die Bremsleuchten am Fahrzeug für das Signalisieren einer Bremsung für den regulären Bremsbetrieb bereits vorhanden sind. Es ist mit der Leuchten-Einschaltvorrichtung vorgesehen, eine Vielzahl von Bremsleuchten einzuschalten. Dies erhöht insgesamt die Leuchtkraft, da sich die Lichtkegel der einzelnen Bremsleuchten bei geeigneter Ausrichtung überlagern können.

In einem erfindungsgemäßen Ausführungsbeispiel kann vorgesehen werden, dass die Brems-Einschaltvorrichtung ein erstes Steuergerät ist, das den Sensor mit der Bremsanlage verbindet. Ferner kann vorgesehen werden, dass die Leuchten-Einschaltvorrichtung ein zweites Steuergerät ist, das mit der Brems-Einschaltvorrichtung verbunden ist: Auch sind weitere Steuergeräte möglich, die bei dem Einleiten eines Bremslichtes beim Einlegen des Rückwärtsganges beteiligt sind. Es können Wirkverbindungen zwischen dem Sensor und einem oder mehreren Steuergeräten bereitstellt werden.

Der Sensor kann über die Brems-Einschaltvorrichtung mit der Bremsanlage des Fahrzeugs verbunden sein. Ferner kann der Sensor über die Leuchten-Einschaltvorrichtung mit der Bremsleuchte verbunden sein. Die Brems-Einschaltvorrichtung und/oder die Leuchten-Einschaltvorrichtung können direkt mit dem Sensor in Kontakt stehen oder den Sensor integrieren. Somit kann über eine oder mehrere Koppelverbindungen der Sensor mit dem ersten und/oder zweiten Steuergerät verbunden sein. Die Steuergeräte können jeweils einen Einschaltbefehl oder ein Signal generieren, das das Einschalten der Bremsanlage und gleichzeitig oder anschließend eine oder mehrere Einschaltvorgänge der Bremsleuchten initiiert. Die Koppelverbindung kann eine elektrische Verbindung, eine hydraulische Verbindung oder eine sonstig geeignete Verbindung zwischen dem installierten Sensor im Fahrzeug und dem installierten Steuergerät im Fahrzeug sein. Es können unterschiedliche Ausführungen eines Sensors verwendet werden, beispielsweise Sensoren, die optisch, akustisch, elektrisch oder hydraulisch arbeiten. Ein hydraulischer Sensor hat den Vorteil, dass er direkt in einer Bremsanlage des Fahrzeugs installiert sein kann, ohne dass eine Transformation eines Signals notwendig ist, um die Bremsanlage mit Bremsleuchte zu betätigen.

Es ist vorgesehen, dass mit der Brems-Einschaltvorrichtung selbsttätig ein erhöhter Bremsdruck einstellbar ist. Durch eine Erhöhung des Bremsdrucks über hydraulische Mittel kann ein Ausleuchten hinter dem Fahrzeug eingeleitet werden. Hierbei wirkt ein Brems-Steuergerät direkt auf die Bremsanlage des Fahrzeugs. Beim Erkennen eines Einlegens des Rückwärtsgangs durch den installierten Sensor wird der Bremsdruck geringfügig erhöht, so dass die Bremsleuchten eingeschaltet werden. Die Bremsleuchte bleibt für die Zeitspanne eingeschaltet, so lange der Bremsdruck eine Schwelle überschreitet, die das Leuchten der Bremsleuchte aktiviert. Verringert sich der Bremsdruck anschließend und fällt unterhalb einer vordefinierten Schwelle, so wird die Bremsleuchte wieder ausgeschaltet. Dies geschieht, sobald der Rückwärtsgang nicht mehr eingelegt ist.

In einem weiteren Ausführungsbeispiel kann vorgesehen werden, dass die Brems-Einschaltvorrichtung ein Teil einer Beleuchtungseinrichtung ist und mit der Brems-Einschaltvorrichtung die Bremsleuchte indirekt einschaltbar ist, indem zunächst die Bremsanlage betätigt wird und danach die Beleuchtungsanlage betätigt wird.

Dies bedeutet, dass der Sensor mit Vorteil elektrisch arbeitet und auf diese Weise das Einlegen eines Rückwärtsgangs erkennt, um direkt auf die Beleuchtungseinrichtung einwirken kann. Der Sensor kann beispielsweise eine elektrische Kapazitätsveränderung detektieren. Bei dieser Ausführungsform kann der Sensor direkt auf ein Steuergerät wirken, ohne dass in die Bremsanlage eingegriffen wird. Dies bedeutet, dass lediglich durch das Einlegen des Rückwärtsgangs eine Aktivierung der Bremsleuchte auf elektrische Weise erfolgt, ohne dass in das hydraulische System der Bremsanlage eingegriffen wird.

In einer bevorzugten Ausführungsform kann vorgesehen werden, dass mit einer eingeschalteten Bremsleuchte der Bereich hinter dem Fahrzeug zusätzlich zu einer eingeschalteten Kennzeichenleuchte ausleuchtbar ist. Da die Leuchte am Kennzeichen des Fahrzeugs eher in einem unteren Heckbereich des Fahrzeugs zu finden ist, kann ein unterer Bereich hinter dem Fahrzeug vermehrt ausgeleuchtet werden.

Das erfindungsgemäße Fahrzeug weist eine Kamera auf, deren Sichtfeld auf den Bereich hinter dem Fahrzeug gerichtet ist und die eingeschaltete Bremsleuchte zur Ausleuchtung des Kamerasichtfeldes verwendet wird. Die Kamera kann demnach entsprechend der Lichtverhältnisse bei eingeschalteten Bremsleuchten ausgerichtet werden. Es ist dabei möglich, dass die Kamera schwenkbar gelagert ist, so dass eine Verschwenkung mit einer Aktivierung eines oder mehrerer Bremsleuchten koordiniert werden kann. Wird beispielsweise durch das Steuergerät nur die Bremsleuchte eingeschaltet, die auf der Seite des Fahrers installiert ist, so kann die Kamera in den Lichtkegel dieser Bremsleuchte gerichtet werden. Durch eine gezielte Ausrichtung kann beispielsweise ein besserer Kontrast von aufgenommenen Bildern erreicht werden. Bei den Bilder der Kamera kann es sich um Standbilder, d.h. Momentaufnahmen handeln oder auch um bewegte Bilder, je nach Ausführung der Kamera. Diese Bilder können dann im Cockpit dem Fahrer bereitgestellt werden, ohne dass der Fahrer in den hinteren Bereich des Fahrzeugs seinen Blick richten muss.

Bevorzugterweise kann in einem erfindungsgemäßen Ausführungsbeispiel vorgesehen werden, dass eine Erhöhung des Bremsdrucks zum Einschalten der Bremsleuchte ohne Betätigung eines Bremspedals des Fahrzeugs durch den Fahrer möglich ist. Es kann demnach die Erhöhung des Bremsdrucks ohne Einwirken des Fahrers erfolgen. Die Auslösung für einen erhöhten Bremsdruck kann der Fahrer des Fahrzeugs allein durch ein Einlegen des Rückwärtsgangs initiieren.

Ferner ist in einem bevorzugten Ausführungsbeispiel der Erfindung die Bremsleuchte eine hochgesetzte Bremsleuchte oberhalb weiterer Bremsleuchten. Bei dieser Ausführungsform können obere Bereiche hinter dem Fahrzeug ausgeleuchtet werden. Dies ist kann ergänzend oder alternativ zu einer oder mehrerer bisheriger Bremsleuchten geschehen, die im Bereich weiterer Leuchten, beispielsweise einer Rückfahrleuchte oder eines Blinkers angeordnet sind.

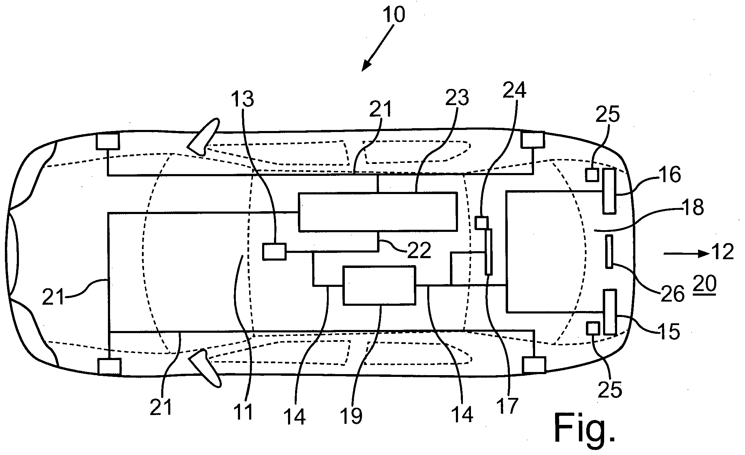

Im Folgenden wird anhand der einzigen Figur ein Ausführungsbeispiel der Erfindung erläutert.

Die beigefügte Figur zeigt ein Fahrzeug 10, das eine Schaltung mit einem Rückwärtsgang 11 zum Rückwärtsfahren des Fahrzeugs 10, in eingezeichneter Richtung 12. Hierbei ist unter Schaltung jede geeignete Schaltung zu verstehen, die in Fahrzeugen verwendet wird, beispielsweise eine Gangschaltung oder eine Automatikschaltung.

Ferner weist das Fahrzeug 10 einen Sensor 13 zum Erkennen des eingelegten Rückwärtsgangs 11 auf. Ferner weist das Fahrzeug 10 eine Koppelverbindung zum Koppeln des Sensors mit mindestens einer Bremsleuchte 15, 16, 17 des Fahrzeugs 10 auf. Im vorliegenden Ausführungsbeispiel weist das Fahrzeug eine erste und eine zweite Bremsleuchte 15, 16 in Höhe einer Heckklappe 18 auf sowie eine weitere dritte Bremsleuchte 17, die oberhalb der ersten und der zweiten Bremsleuchte 15, 16 angeordnet ist und als hochgesetzte Bremsleuchte verstanden werden kann. Ferner weist das Fahrzeug eine Leuchten-Einschaltvorrichtung 19 auf, die direkt über eine Wirkverbindung 14 jeweils mit den Bremsleuchten 15, 16, 17 in Verbindung steht. Die Leuchten-Einschaltvorrichtung 19 ist hier als BCM2-Gerät ausgeführt und ist demnach als Steuergerät der Beleuchtungsvorrichtung ausgebildet. Die Leuchten-Einschaltvorrichtung 19 oder das Steuergerät schaltet die Bremsleuchten 15, 16, 17 ein, sobald ein eingelegter Rückwärtsgang 11 von dem Sensor 13 erkannt wird.

Beim Erkennen des eingelegten Rückwärtsgangs wird in einem Bereich 20 hinter dem Fahrzeug 10 die Beleuchtung intensiviert, indem die Bremsleuchten 15, 16, 17 aktiviert werden. Hierzu wird ein Bremsdruck in einer installierten Bremsanlage 21 des Fahrzeugs 10 aufgebaut. Dies geschieht, indem der Sensor 13 über eine weitere Wirkverbindung 22 mit einer Brems-Einschaltvorrichtung 23 der Bremsanlage 21 verbunden ist und die Brems-Einschaltvorrichtung 23 den Bremsdruck in den hydraulischen Leitungen der Bremsanlage 21 erhöht, so dass die Bremsleuchten 15, 16, 17 zu leuchten beginnen. Hierzu steht das Steuergerät der Brems-Einschaltvorrichtung 23 mit dem Steuergerät der Leuchten-Einschaltvorrichtung 19 in Kommunikationsverbindung. Die Erhöhung des Bremsdrucks in der Bremsanlage 21 wird durch das Einlegen des Rückwärtsganges 11 eingeleitet. Eine Betätigung eines Bremspedals im Fahrzeug 10 durch den Fahrer ist hierfür nicht notwendig. Durch den erhöhten Druck in der Bremsanlage 21 wird der rückwärtige Raum 20 hinter dem Fahrzeug 10 zusätzlich durch die hochgesetzte Bremsleuchte 17 und die Bremsleuchten der Heckleuchten 15, 16 beleuchtet. Diese kann zusätzlich so optimiert werden, dass die Ausleuchtung hinter dem Fahrzeug 10 weiter verbessert wird.

Mit anderen Worten, wird bei einem Automatikgetriebe der Wählhebel auf den Rückwärtsgang 11 gestellt oder bei einem manuellen Getriebe der Rückwärtsgang 11 eingelegt, so wird dies durch den Sensor 13 erkannt. Diese Information wird der Brems-Einschaltvorrichtung bzw. einem Steuergerät 23 der Bremsanlage zur Verfügung gestellt das den Bremsdruck in der Bremsanlage 21 leicht erhöht. Die Bremsdruckerhöhung ist vergleichbar mit einer Bremsdruckerhöhung bei einer ABS-Anwendung oder einer Trockenfahrfunktion. Die Information über den eingelegten Rückwärtsgang 11 wird ebenfalls dem BCM2 19 bzw. dem für die Beleuchtung zuständigen Steuergerät 19 zur Verfügung gestellt, das die Bremsleuchten 15, 16 und die hochgesetzte Bremsleuchte 17 einschaltet.

Mit den eingeschalteten Bremsleuchten 15, 16, 17 kann demnach der Bereich 20 hinter dem Fahrzeug 10 zusätzlich zu einer eingeschalteten Rückfahrleuchte 25 und/oder zusätzlich zu eingeschalteten Kennzeichenleuchte 26 ausgeleuchtet werden. Dies bedeutet, dass Bremsleuchten einzeln oder gemeinsam eingeschaltet werden, um definiert den hinteren Außenbereich 20 des Fahrzeugs 10 aufzuleuchten, um beispielsweise kontrastreichere Bilder über die Kamera 24 zu erhalten. Somit ergibt sich auch der Vorteil, dass die installierte Rückfahrkamera 24 durch die verbesserte Beleuchtung hinter dem Fahrzeug 10 verbessere Bilder liefern kann. Die Fahrzeuginsassen, insbesondere der Fahrer des Fahrzeugs, kann auf dem Kamerabild Objekte und Personen früher erkennen. Dies führt zu einer erhöhten passiven Sicherheit des Fahrzeuges 10.

## Patentansprüche

1. Fahrzeug aufweisend
eine Bremsanlage (21) zum Bremsen des Fahrzeugs (10);
einen Rückwärtsgang (11) zum Einleiten eines Rückwärtsfahrens des Fahrzeugs (10);
einen Sensor (13) zum Erkennen eines eingelegten Rückwärtsgangs (11);
eine Brems-Einschaltvorrichtung (23), die mit dem Sensor (13) verbunden ist, wobei die Brems-Einschaltvorrichtung (23) die Bremsanlage (21) selbsttätig durch das Einlegen eines Rückwärtsganges aktiviert, ohne dass ein Fahrer des Fahrzeugs (10) eine Bremse betätigt, sobald der Sensor (13) den eingelegten Rückwärtsgang (11) erkannt hat, **dadurch gekennzeichnet, dass**
bei aktivierter Bremsanlage (21) über eine Leuchten-Einschaltvorrichtung (19) eine Vielzahl von Bremsleuchten (15, 16, 17) des Fahrzeugs (10) einschaltbar ist,
mit der Brems-Einschaltvorrichtung (23) selbsttätig ein erhöhter Bremsdruck einstellbar ist, wobei beim Erkennen eines Einlegens des Rückwärtsgangs (11) durch den Sensor (13) der Bremsdruck geringfügig derart erhöht wird, dass die Vielzahl von Bremsleuchten (15, 16, 17) eingeschaltet wird, wobei bei der eingeschalteten Vielzahl von Bremsleuchten (15, 16, 17) ein Bereich (20) hinter dem Fahrzeug (10) zusätzlich zu einer eingeschalteten Rückfahrleuchte (25) ausgeleuchtet wird, und das Fahrzeug (10) eine Kamera (24) aufweist, deren Sichtfeld auf den Bereich (20) hinter dem Fahrzeug (10) gerichtet ist und die eingeschaltete Vielzahl von Bremsleuchten (15, 16, 17) zur Ausleuchtung des Kamerasichtfeldes verwendet wird, wobei die Kamera (24) schwenkbar gelagert ist, so dass eine Verschwenkung mit einer Aktivierung einer der Vielzahl der Bremsleuchten (15, 16, 17) koordiniert wird.

2. Fahrzeug nach Anspruch 1, wobei die Brems-Einschaltvorrichtung (23) ein erstes Steuergerät ist, das den Sensor (13) mit der Bremsanlage (21) verbindet.

3. Fahrzeug nach Anspruch 1 oder Anspruch 2, wobei die Leuchten-Einschaltvorrichtung (19) ein zweites Steuergerät ist, das mit der Brems-Einschaltvorrichtung (23) verbunden ist.

4. Fahrzeug nach einem der Ansprüche 1 bis 3, wobei mit einer eingeschalteten Bremsleuchte (15, 16, 17) der Bereich (20) hinter dem Fahrzeug (10) zusätzlich zu einer eingeschalteten Kennzeichenleuchte (26) ausleuchtbar ist.

5. Fahrzeug nach einem der Ansprüche 1 bis 4, wobei eine Erhöhung des Bremsdrucks zum Einschalten der Bremsleuchte (15, 16, 17) ohne Betätigung eines Bremspedals des Fahrzeugs (10) durch den Fahrer möglich ist.

6. Fahrzeug nach einem der Ansprüche 1 bis 5, wobei die Bremsleuchte (15, 16, 17) eine hochgesetzte Bremsleuchte (17) oberhalb weiterer Bremsleuchten (15, 16) ist.

7. Verfahren zum Ausleuchten eines Bereichs (20) hinter einem Fahrzeug (10), aufweisend
Erkennen eines Einlegen eines Rückwärtsganges (11);
selbsttätiges Aktivieren einer Bremsanlage (21) des Fahrzeugs (10) durch das Einlegen eines Rückwärtsganges (11), ohne dass ein Fahrer des Fahrzeugs (10) eine Bremse betätigt;
**gekennzeichnet durch**
Einschalten einer Vielzahl von Bremsleuchten (15, 16, 17) des Fahrzeugs (10);
geringfügiges Erhöhen des Bremsdrucks beim Erkennen eines Einlegens des Rückwärtsgangs (11) durch den Sensor (13) derart, dass die Vielzahl von Bremsleuchten (15, 16, 17) eingeschaltet wird; Ausleuchten mit der Vielzahl der eingeschalteten Bremsleuchten (15, 16, 17) des Bereichs (20) hinter dem Fahrzeug (10) zusätzlich zu einer eingeschalteten Rückfahrleuchte (25);
Ausleuchten eines Kamerasichtfeldes mittels der eingeschalteten Vielzahl von Bremsleuchten (15, 16, 17) unter Verwendung einer Kamera (24) des Fahrzeugs (10), deren Sichtfeld auf den Bereich (20) hinter dem Fahrzeug (10) gerichtet ist, wobei die Kamera (24) schwenkbar gelagert ist, so dass eine Verschwenkung mit einer Aktivierung einer der Vielzahl der Bremsleuchten (15, 16, 17) koordiniert wird.

## Claims

1. Vehicle comprising
a braking system (21) for braking the vehicle (10);
a reverse gear (11) for starting to drive the vehicle in reverse (10);
a sensor (13) for detecting an engaged reverse gear (11);
a brake activating device (23), connected to the sensor (13), wherein the brake activating device (23) activates the braking system (21) automatically by engaging a reverse gear, without a driver of the vehicle (10) operating a brake, once the sensor (13) has detected the engaged reverse gear (11),
**characterised in that**,
when the braking system (21) is activated, a plurality of brake lights (15, 16, 17) of the vehicle (10) can be switched on by means of a light switch-on device (19),
an increased braking pressure is automatically adjustable with the brake activating device (23), wherein upon the detection of an engaging of the reverse gear (11) by the sensor (13) the braking pressure is increased slightly, such that the plurality of brake lights (15, 16, 17) is switched on, wherein, when the plurality of brake lights (15, 16, 17) is switched on, a region (20) behind the vehicle (10) is illuminated in addition to a switched-on reversing light (25), and the vehicle (10) comprises a camera (24), the field of view of which is directed onto the region (20) behind the vehicle (10) and the switched-on plurality of brake lights (15, 16, 17) is used to illuminate the field of view of the camera, wherein the camera (24) is pivotably mounted, so that a pivoting is coordinated with an activation of one of the plurality of the brake lights (15, 16, 17).

2. Vehicle according to claim 1, wherein the brake activating device (23) is a first control device that connects the sensor (13) to the braking system (21).

3. Vehicle according to claim 1 or claim 2, wherein the light switch-on device (19) is a second control device that is connected to the brake activating device (23).

4. Vehicle according to any one of claims 1 to 3, wherein the region (20) behind the vehicle (10) can be illuminated with a switched-on brake light (15, 16, 17) in addition to a switched-on licence plate light (26).

5. Vehicle according to any one of claims 1 to 4, wherein an increasing of the braking pressure to switch on the brake light (15, 16, 17) is possible without any operation of a brake pedal of the vehicle (10) by the driver.

6. Vehicle according to any one of claims 1 to 5, wherein the brake light (15, 16, 17) is a high-level brake light (17) above further brake lights (15, 16).

7. Method for illuminating a region (20) behind a vehicle (10), comprising detection of an engaging of a reverse gear (11);
automatic activation of a braking system (21) of the vehicle (10) through the engaging of a reverse gear (11), without a driver of the vehicle (10) operating a brake;
**characterised by**
switching-on of a plurality of brake lights (15, 16, 17) of the vehicle (10);
slight increasing of the braking pressure upon detection of an engaging of the reverse gear (11) by the sensor (13), such that the plurality of brake lights (15, 16, 17) is switched on;
illumination of the region (20) behind the vehicle (10) with the plurality of the switched-on brake lights (15, 16, 17) in addition to a switched-on reversing light (25);
illumination of a field of view of the camera by means of the switched-on plurality of brake lights (15, 16, 17) with the use of a camera (24) of the vehicle (10), the field of view of which is directed onto the region (20) behind the vehicle (10), wherein the camera (24) is pivotably mounted, so that a pivoting is coordinated with an activation of one of the plurality of the brake lights (15, 16, 17).

## Revendications

1. Véhicule présentant
un système de freinage (21) pour freiner le véhicule (10) ;
une marche arrière (11) pour activer une conduite en marche arrière du véhicule (10) ;
un capteur (13) pour détecter une marche arrière engagée (11) ;
un dispositif de mise en marche du frein (23), qui est en liaison avec le capteur (13), le dispositif de mise en marche du frein (23) activant automatiquement le système de freinage (21), en engageant une marche arrière, sans qu'un conducteur du véhicule (10) n'actionne un frein, dès que le capteur (13) a détecté la marche arrière engagée (11), **caractérisé en ce que**
une pluralité de feux-stop (15, 16, 17) du véhicule (10) peut être mise en circuit lorsque le système de freinage est activé (21) par l'intermédiaire du dispositif de mise en circuit de l'éclairage (19),
une pression de freinage accrue peut être réglée automatiquement au moyen du dispositif de mise en marche du frein (23), la pression de freinage étant légèrement augmentée par le capteur (13) lorsque l'engagement de la marche arrière (11) est détecté de sorte que lorsque la pluralité de feux-stop (15, 16, 17) est allumée, une zone (20) derrière le véhicule (10) étant éclairée en plus d'un feu de recul (25) activé lorsque la pluralité de feux-stop (15, 16, 17) est allumée, et le véhicule (10) présente une caméra (24) dont le champ de vision est orienté vers la zone (20) située derrière le véhicule (10) et la pluralité de feux-stop (15, 16, 17) allumée sert à éclairer le champ de vision de caméra, la caméra (24) étant montée de manière pivotante de sorte que le pivotement est coordonné avec l'activation de l'un de la pluralité de feux-stop (15, 16, 17).

2. Véhicule selon la revendication 1, dans lequel le dispositif de mise en marche du frein (23) est un premier dispositif de commande reliant le capteur (13) au système de freinage (21).

3. Véhicule selon la revendication 1 ou 2, dans lequel le dispositif de mise en circuit de l'éclairage (19) est un deuxième dispositif de commande connecté au dispositif de mise en marche du frein (23).

4. Véhicule selon l'une quelconque des revendications 1 à 3,
dans lequel la zone (20) située derrière le véhicule (10) peut être éclairée par un feu-stop (15, 16, 17) allumé en plus d'un feu de plaque d'immatriculation (26) allumé.

5. Véhicule selon l'une quelconque des revendications 1 à 4, dans lequel il est possible d'augmenter la pression de freinage pour allumer le feu-stop (15, 16, 17) sans que le conducteur actionne une pédale de frein du véhicule (10).

6. Véhicule selon l'une quelconque des revendications 1 à 5, dans lequel le feu-stop (15, 16, 17) est un feu-stop (17) surélevé au-dessus d'autres feux-stop (15, 16).

7. Procédé pour éclairer une zone (20) derrière un véhicule (10), présentant la reconnaissance de l'engagement d'une marche arrière (11) ;
l'activation automatique d'un système de freinage (21) du véhicule (10) en engageant une marche arrière (11) sans qu'un conducteur du véhicule (10) actionne un frein ;
**caractérisé par** :
un allumage d'une pluralité de feux-stop (15, 16, 17) du véhicule (10) ;
une légère augmentation de la pression de freinage lors de la détection de l'engagement de la marche arrière (11) par le capteur (13) de sorte que la pluralité de feux-stop (15, 16, 17) s'allume ;
un éclairage avec la pluralité de feux-stop (15, 16, 17) allumés de la zone (20) derrière le véhicule (10) en plus d'un feu de recul (25) allumé ;
un éclairage d'un champ de vision de caméra au moyen de la pluralité de feux-stop (15, 16, 17) allumés, en utilisant une caméra (24) du véhicule (10) dont le champ de vision est orienté vers la zone (20) située derrière le véhicule (10), la caméra (24) étant montée de manière pivotante de sorte que le pivotement est coordonné avec l'activation de l'un de la pluralité de feux-stop (15, 16, 17).
